# FASCICULE DE BREVET EUROPEEN

(11) **EP 2 934 913 B1**
(45) Date de publication et mention de la délivrance du brevet: **06.12.2017**
(21) Numéro de dépôt: 13811892.2
(22) Date de dépôt: 18.12.2013
(51) Int. Cl.: B60C 9/28, B60C 9/18, B60C 9/22, B60C 9/20

(54) **SOMMET DE PNEUMATIQUE POUR VEHICULE LOURD DE TYPE GENIE CIVIL**
REIFENLAUFSTREIFEN FÜR SCHWERLASTFAHRZEUG
TIRE TREAD FOR HEAVY DUTY VEHICLE

(30) Priorité: 20.12.2012 FR 1262424
(43) Date de publication de la demande: 28.10.2015
(73) Titulaire: Compagnie Générale des Etablissements Michelin, 63000 Clermont-Ferrand (FR)
(72) Inventeur: SEJALON, Olivier, F-63040 Clermont-Ferrand Cedex 9 (FR)
(74) Mandataire: Millanvois, Patrick Jacques Jean
(86) Numéro de dépôt international: PCT/EP2013/077027
(87) Numéro de publication internationale: WO 2014/095957

(56) Documents cités:
- EP-A1- 2 106 930
- WO-A1-2011/070111
- DE-A1-102006 029 898
- FR-A1- 2 566 334

## Description

La présente invention concerne un pneumatique radial, destiné à équiper un véhicule lourd de type génie civil, et a pour objet, plus particulièrement, le sommet d'un tel pneumatique.

Bien que non nécessairement limitée à ce type d'application, l'invention est plus particulièrement décrite pour un pneumatique radial de grande dimension, destiné à être monté sur un dumper, véhicule de transport de matériaux extraits de carrières ou de mines de surface. Par pneumatique de grande dimension, on entend un pneumatique destiné à être monté sur une jante dont le diamètre nominal, au sens de la norme de la « European Tyre and Rim Technical Organisation » ou ETRTO, est au moins égal à 25 pouces.

Un dumper est destiné à rouler sur des chemins ou des routes de chantier ou de mines plus ou moins sinueux et partiellement recouverts de pierres de tailles diverses. En utilisation, les pneumatiques d'un dumper sont soumis d'une part aux sollicitations mécaniques de roulage, d'autre part aux sollicitations mécaniques générées par les pierres réparties sur la route. Parmi les sollicitations mécaniques de roulage, les sollicitations transversales, résultant d'un parcours plus ou moins sinueux, sont en particulier dimensionnantes pour un tel pneumatique et nécessitent de la part du pneumatique une capacité à générer une poussée transversale suffisante. Par ailleurs, les sollicitations mécaniques générées par les pierres créent des chocs sur le sommet du pneumatique, susceptibles de détériorer le pneumatique : le sommet du pneumatique doit alors être capable d'absorber ces chocs.

Un pneumatique comprend un sommet destiné à venir en contact avec le sol par l'intermédiaire d'une bande de roulement. Ce sommet est réuni par l'intermédiaire de deux flancs à deux bourrelets, destinés à assurer la liaison mécanique entre le pneumatique et la jante sur laquelle il est monté.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur, respectivement radialement extérieur» signifient «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la bande de roulement du pneumatique et perpendiculaire à l'axe de rotation du pneumatique.

Un pneumatique radial comprend une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse constituée de renforts généralement métalliques enrobés d'un matériau élastomérique d'enrobage ou mélange d'enrobage. Dans le domaine du pneumatique, on appelle usuellement mélange un matériau élastomérique obtenu par mélangeage des composants du matériau. La couche de carcasse comprend une partie principale, reliant les deux bourrelets du pneumatique entre eux et s'enroulant, dans chaque bourrelet, de l'intérieur vers l'extérieur du pneumatique autour d'un élément de renforcement circonférentiel généralement métallique appelé tringle, pour former un retournement. Les renforts métalliques d'une couche de carcasse sont sensiblement parallèles entre eux et font, avec la direction circonférentielle, un angle compris entre 85° et 95°.

L'armature de sommet d'un pneumatique radial pour véhicule lourd de type génie civil comprend une superposition de couches de sommet disposées circonférentiellement et radialement à l'extérieur de l'armature de carcasse. Chaque couche de sommet est constituée de renforts généralement métalliques, parallèles entre eux et enrobés d'un matériau élastomérique d'enrobage ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, constituée d'au moins une couche de protection, protège essentiellement les couches de travail des agressions mécaniques ou physico-chimiques, susceptibles de se propager à travers la bande de roulement radialement vers l'intérieur du pneumatique.

Dans le cas d'un pneumatique pour dumper, l'armature de protection comprend souvent deux couches de protection, radialement superposées et adjacentes. Chaque couche de protection comprend des renforts métalliques élastiques, parallèles entre eux et formant avec la direction circonférentielle un angle généralement compris entre 15° et 35°, et de préférence entre 20° et 30°. Les renforts métalliques des couches de protection sont le plus souvent croisés d'une couche de protection à la suivante.

L'armature de travail, constituée d'au moins deux couches de travail, a pour fonction de ceinturer le pneumatique et de donner de la rigidité et de la tenue de route au pneumatique. Elle reprend à la fois des sollicitations mécaniques de gonflage, générés par la pression de gonflage du pneumatique et transmis par l'armature de carcasse, et des sollicitations mécaniques de roulage, générés par le roulage du pneumatique sur un sol et transmis par la bande roulement. Elle doit en outre résister à l'oxydation et aux chocs et perforations, grâce à sa conception intrinsèque et à celle de l'armature de protection.

Dans le cas d'un pneumatique pour dumper, l'armature de travail comprend usuellement deux couches de travail, radialement superposées et adjacentes. Chaque couche de travail comprend des renforts métalliques non élastiques, parallèles entre eux et formant avec la direction circonférentielle un angle généralement compris entre 15° et 45°. Les renforts métalliques des couches de travail sont le plus souvent croisés d'une couche de travail à la suivante.

En outre, dans le cas d'un pneumatique pour dumper comprenant une armature de travail à deux couches de travail, l'angle dit d'équilibre de l'armature de travail, défini de telle sorte que le carré de la tangente de l'angle d'équilibre est égal au produit des tangentes des angles respectifs des renforts de chaque couche de travail, est au plus égal à 45°. En d'autres termes, l'angle d'équilibre est celui formé par les renforts métalliques de chacune des deux couches de travail d'une armature de travail mécaniquement équivalente à l'armature de travail de référence. Ce critère d'angle d'équilibre traduit le fait que la rigidité axiale ou transversale de l'armature de travail, c'est-à-dire la force axiale à appliquer à l'armature de travail pour obtenir un déplacement axial égal à 1mm, est plutôt élevée.

Concernant la caractérisation des renforts métalliques, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Ap résulte de la plasticité (déformation irréversible au-delà de la limite d'élasticité) du métal de ces fils métalliques pris individuellement. Ces différents allongements ainsi que leur signification respective, bien connus de l'homme du métier, sont décrits, par exemple, dans les documents US5843583, WO2005/014925 et WO2007/090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non élastiques, tels que ceux utilisés dans les couches de travail.

Un renfort métallique élastique est caractérisé par un allongement structural Aₛ au moins égal à 1% et un allongement total à rupture Aₜ au moins égal à 4%. En outre, un renfort métallique élastique a un module élastique en extension au plus égal à 150 GPa, et compris usuellement entre 40 GPa et 150 GPa.

Un renfort métallique non élastique est caractérisé par un allongement relatif, sous une force de traction égale 10% de la force à rupture Fₘ, au plus égal à 0.2%. Par ailleurs, un renfort métallique non élastique a un module élastique en extension compris usuellement entre 150 GPa et 200 GPa.

Sous l'effet des sollicitations mécaniques générées par les pierres présentes sur le sol ou chocs, l'armature de sommet précédemment décrite, comprenant une armature de protection comprenant au moins deux couches de protection et une armature de travail comprenant au moins deux couches de travail, peut subir une rupture partielle, voire totale. En pratique, il se produit une rupture en cascade des couches de sommet, depuis la couche de sommet la plus radialement extérieure jusqu'à la couche de sommet la plus radialement intérieure.

Pour caractériser la résistance à la rupture d'une armature de sommet de pneumatique soumise à des chocs, il est connu de l'homme du métier de réaliser des tests consistant à faire rouler un pneumatique, gonflé à une pression recommandée et soumis à une charge recommandée, sur un obstacle ou indenteur cylindrique de diamètre comprise entre 1 pouce, soit 25.4 mm, et 2.2 pouces, soit 55.9 mm, selon la dimension du pneumatique, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet.

Le document WO 2011070111 décrit un pneumatique pour véhicule lourd selon le préambule de la revendication1, comprenant une armature de sommet comprenant une armature de travail, constituée d'au moins deux couches de travail superposées et formées de câbles inextensibles parallèles dans chaque couche et croisés d'une couche à la suivante, et une armature de protection, constituée d'au moins une couche de protection formée de câbles extensibles, dits élastiques.

Les inventeurs se sont donnés pour objectif de désensibiliser l'armature de sommet d'un pneumatique radial pour véhicule lourd de type génie civil aux sollicitations mécaniques générées par les pierres présentes sur le sol.

Cet objectif a été atteint, selon l'invention, par un pneumatique pour véhicule lourd de type génie civil comprenant :
- une bande de roulement, une armature de sommet radialement intérieure à la bande de roulement et une armature de carcasse radialement intérieure à l'armature de sommet,
- l'armature de sommet comprenant, radialement de l'extérieur vers l'intérieur,
- une armature de protection comprenant une première couche de protection et une deuxième couche de protection radialement extérieure et adjacente à la première couche de protection, les première et deuxième couches de protection comprenant des renforts métalliques élastiques caractérisés par un allongement structural Aₛ au moins égal à 1%, un allongement total à rupture Aₜ au moins égal à 4% et un module élastique en extension au plus égal à 150 GPa, parallèles entre eux dans chaque couche et croisés d'une couche à la suivante, en formant avec la direction circonférentielle des angles respectifs A₁ et A₂,
- une armature de travail comprenant une première couche de travail et une deuxième couche de travail radialement extérieure et adjacente à la première couche de travail, les première et deuxième couches de travail comprenant des renforts métalliques non élastiques caractérisés par un allongement relatif, sous une force de traction égale 10% de la force à rupture Fₘ, au plus égal à 0.2% et un module élastique en extension compris entre 150 GPa et 200 GPa, parallèles entre eux dans chaque couche et croisés d'une couche à la suivante, en formant avec la direction circonférentielle des angles respectifs B₁ et B₂,
- l'angle B₁, formé avec la direction circonférentielle par les renforts métalliques de la première couche de travail, étant au moins égal à 50° et strictement inférieur à 90° et l'angle B₂, formé avec la direction circonférentielle par les renforts métalliques de la deuxième couche de travail, étant non nul et au plus égal à 12°.

Dans l'état de la technique, chaque couche de travail comprend des renforts métalliques non élastiques, parallèles entre eux et formant avec la direction circonférentielle un angle généralement compris entre 15° et 45°. L'armature de travail selon l'invention se distingue donc par le fait que l'angle B₁, formé avec la direction circonférentielle par les renforts métalliques de la première couche de travail, est au moins égal à 50°, c'est-à-dire supérieur à la valeur maximale de 40°, et par le fait que l'angle B₂, formé avec la direction circonférentielle par les renforts métalliques de la deuxième couche de travail, est au plus égal à 12°, c'est-à-dire inférieur à la valeur minimale de 15°. Il est à noter que les valeurs d'angles extrêmes de 90°, pour l'angle B₁ renforts métalliques de la première couche de travail, et de 0°, pour l'angle B₂ renforts métalliques de la deuxième couche de travail, sont exclues de l'invention.

L'écart entre les angles B₁ et B₂ des renforts métalliques respectivement de la première et de la deuxième couche de travail, ou plus exactement entre leurs valeurs absolues, est au moins égal à 37°. L'angle d'équilibre B précédemment défini, vérifiant (tan B)²=(tan B₁)* (tan B₂), est au plus égal à 45° comme dans l'état de la technique, c'est-à-dire que le comportement mécanique globale de l'armature de travail, sous les sollicitations mécaniques de roulage, est équivalent à celui de l'armature de travail du pneumatique de l'état de la technique pris en référence.

Vis-à-vis des sollicitations mécaniques générées par les pierres, c'est-à-dire des obstacles, la résistance à la rupture de l'armature de travail est sensiblement améliorée. La hauteur critique de l'indenteur provoquant la rupture totale de l'armature de travail selon l'invention est au moins égale à 1.2 fois la hauteur critique de l'indenteur provoquant la rupture totale de l'armature de travail de l'état de la technique pris en référence. En d'autres termes, la résistance à la rupture de l'armature de travail est augmentée d'au moins 20%.

Préférentiellement, l'angle B₁, formé avec la direction circonférentielle par les renforts métalliques de la première couche de travail, est au moins égal à 60° : ce qui augmente encore la résistance à rupture de l'armature de travail.

Egalement préférentiellement, l'angle B₂, formé avec la direction circonférentielle par les renforts métalliques de la deuxième couche de travail, est au plus égal à 10° : ce qui contribue également à l'augmentation de la résistance à rupture de l'armature de travail.

Les angles A₁ et A₂, formés avec la direction circonférentielle par les renforts métalliques respectivement de la première et de la deuxième couche de protection, sont au moins égaux à 70° et strictement inférieurs à 90°. Cet intervalle d'angles pour les couches de protection permettent d'augmenter la résistance à rupture l'armature de protection de l'ordre de 10%. En combinaison avec les couches de travail précédemment décrites, le gain en résistance à rupture de l'armature de travail peut atteindre alors au moins 35%.

Les angles A₁ et A₂, formés avec la direction circonférentielle par les renforts métalliques respectivement de la première et de la deuxième couche de protection, sont avantageusement au moins égaux à 80° et strictement inférieurs à 90°. L'effet technique précédemment décrit est ainsi encore amplifié.

Les angles A₁ et A₂, formés avec la direction circonférentielle par les renforts métalliques respectivement de la première et de la deuxième couche de protection, sont préférentiellement égaux entre eux en valeur absolue.

Il est avantageux que la première couche de protection soit radialement extérieure et adjacente à la deuxième couche de travail. Par adjacente, on entend une couche en contact direct avec la suivante, c'est-à-dire non séparée de la suivante par un composant intercalaire tel que, par exemple, une couche de mélange élastomérique. Cette proximité des deux couches respectivement de protection et de travail garantit un couplage mécanique entre l'armature de travail et l'armature de protection.

Les renforts métalliques de la première couche de protection sont également avantageusement croisés par rapport aux renforts métalliques de la deuxième couche de travail. Le croisement entre les renforts respectifs de la première couche de protection et de la deuxième couche de travail améliore également le fonctionnement mécanique de l'armature de sommet.

Pour les plus grandes dimensions de pneumatiques, destinées à être montées sur une jante de diamètre nominal au moins égal à 49 pouces, l'armature de sommet comprend en outre et le plus souvent, radialement à l'intérieur de l'armature de travail, une armature additionnelle comprenant une première couche additionnelle, et une deuxième couche additionnelle, radialement extérieure et adjacente à la première couche additionnelle, les première et deuxième couches additionnelles comprenant des renforts métalliques non élastiques, parallèles entre eux dans chaque couche et croisés d'une couche à la suivante, en formant avec la direction circonférentielle des angles respectifs C₁ et C₂ au plus égaux à 15°. Cette armature additionnelle a une fonction de frettage, c'est-à-dire qu'elle limite les déplacements radiaux du l'armature de carcasse lors du gonflage du pneumatique.

Les angles C₁ et C₂, formés avec la direction circonférentielle par les renforts métalliques respectivement de la première et de la deuxième couche additionnelle, sont préférentiellement au plus égaux à 12°. Plus ces angles sont faibles, plus l'effet de frettage de l'armature de carcasse est important et plus les sollicitations mécaniques aux extrémités des couches de travail sont diminuées.

Les angles C₁ et C₂, formés avec la direction circonférentielle par les renforts métalliques respectivement de la première et de la deuxième couche additionnelle, sont encore préférentiellement égaux entre eux en valeur absolue.

La bande de roulement et l'armature de protection ayant des largeurs axiales respectives L₂ et L₅, la largeur axiale L₅ de l'armature de protection est au moins égale 0.85 fois et au plus égale à la largeur axiale L₂ de la bande de roulement. Par largeur axiale de la bande de roulement, on entend la distance axiale entre les projections des extrémités de la bande de roulement sur une droite axiale, c'est-à-dire parallèle à l'axe de rotation du pneumatique. Par largeur axiale de l'armature de protection, on entend la largeur axiale de la couche de protection axialement la plus large, c'est-à-dire la distance axiale entre les projections des extrémités de ladite couche de protection sur une droite axiale.

Dans un pneumatique selon l'invention, la couche de protection axialement la plus large est généralement la première couche de protection, la plus radialement intérieur de l'armature de protection. La deuxième couche de protection est axialement plus étroite avec une largeur axiale comprise entre 0.6 fois et 0.75 fois la largeur axiale L₂ de la bande de roulement. Dans une telle conception, la couche de protection est dite débordante car elle est plus large que la première couche de travail : ce qui permet de diminuer le risque de décollement des extrémités de la première couche de travail sous l'effet de chocs répétés sur la bande de roulement. La deuxième couche de protection est plus étroite en vue de se limiter à la protection de l'armature de travail dans la portion médiane la plus sollicitée par les chocs sur la bande de roulement.

La bande de roulement et l'armature de travail ayant des largeurs axiales respectives L₂ et L₆, la largeur axiale L₆ de l'armature de travail est au moins égale 0.7 fois et au plus égale à 0.9 fois la largeur axiale L₂ de la bande de roulement. Comme pour l'armature de protection, la largeur axiale de l'armature de travail est la largeur axiale de la couche de travail axialement la plus large, c'est-à-dire la distance axiale entre les projections des extrémités de ladite couche de travail sur une droite axiale.

Dans un pneumatique selon l'invention, la couche de travail axialement la plus large est généralement la première couche de travail, la plus radialement intérieur de l'armature de travail. La deuxième couche de travail est axialement plus étroite avec une largeur axiale comprise entre 0.65 fois et 0.8 fois la largeur axiale L₂ de la bande de roulement. Une telle conception de l'armature de travail résulte d'un compromis entre les objectifs de renforcement et d'endurance de l'armature de travail.

La bande de roulement et l'armature additionnelle ayant des largeurs axiales respectives L₂ et L₇, la largeur axiale L₇ de l'armature additionnelle est au moins égale 0.35 fois et au plus égale à 0.5 fois la largeur axiale L₂ de la bande de roulement. Par largeur axiale de l'armature additionnelle, on entend la largeur axiale de la couche additionnelle axialement la plus large, c'est-à-dire la distance axiale entre les projections des extrémités de ladite couche additionnelle sur une droite axiale.

Dans un pneumatique selon l'invention, la couche additionnelle axialement la plus large est généralement la première couche additionnelle, la plus radialement intérieur de l'armature additionnelle. La deuxième couche additionnelle est axialement plus étroite avec une largeur axiale comprise entre 0.3 fois et 0.45 fois la largeur axiale L₂ de la bande de roulement. Une telle conception de l'armature additionnelle permet de limiter la déformation radiale de l'armature de carcasse essentiellement dans sa portion médiane, en d'autres termes de limiter la fonction de frettage de l'armature additionnelle à la portion médiane du pneumatique.

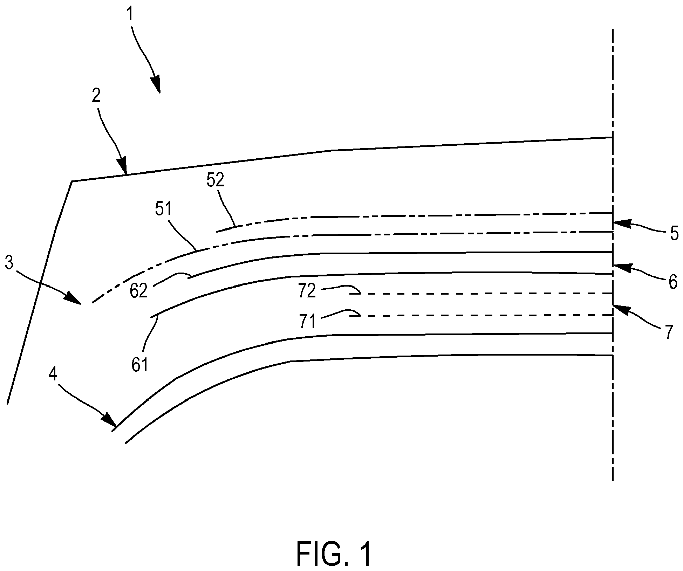

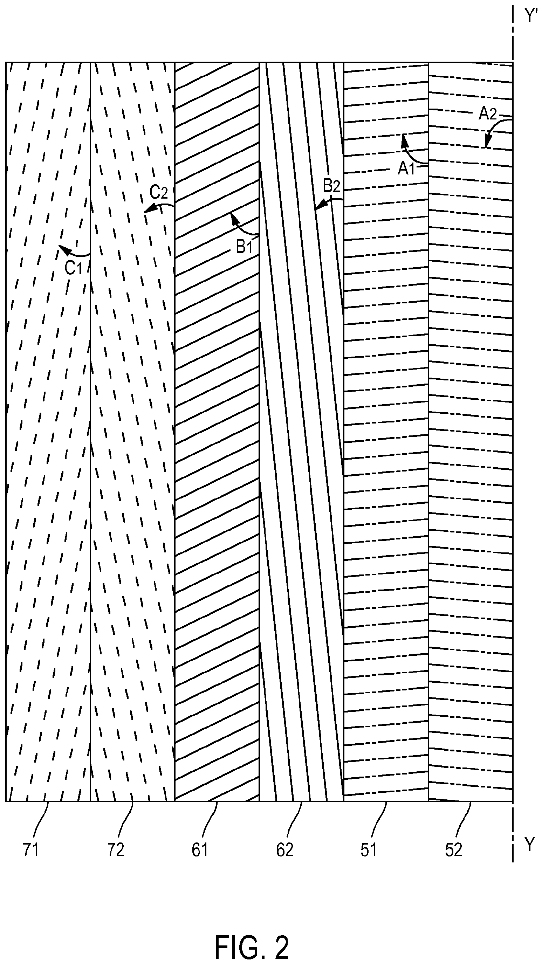

Les caractéristiques de l'invention seront mieux comprises à l'aide de la description des figures 1 et 2 :
- la figure 1 présente, de façon simplifiée et non à l'échelle, une demi-coupe, dans un plan méridien, d'un sommet de pneumatique pour véhicule lourd de type génie civil, selon l'invention.
- la figure 2 présente une vue de dessus en plan de l'armature de sommet d'un pneumatique selon l'invention, les couches de sommet étant tronquées de façon à mettre en évidence les angles des renforts des diverses couches constitutives de l'armature de sommet.

Sur la figure 1, est représentée une demi-coupe méridienne du sommet d'un pneumatique 1 pour véhicule lourd de type génie civil comprenant une bande de roulement 2, une armature de sommet 3 radialement intérieure à la bande de roulement 2 et une armature de carcasse 4 radialement intérieure à l'armature de sommet 3. L'armature de sommet 3 comprend, radialement de l'extérieur vers l'intérieur, une armature de protection 5 comprenant une première couche de protection 51 et une deuxième couche de protection 52, radialement extérieure et adjacente à la première couche de protection 51, une armature de travail 6 comprenant une première couche de travail 61, et une deuxième couche de travail 62, radialement extérieure et adjacente à la première couche de travail 61, et une armature additionnelle 7 comprenant une première couche additionnelle 71, et une deuxième couche additionnelle 72, radialement extérieure et adjacente à la première couche additionnelle 71.

Sur la figure 2, est représentée une vue de dessus en plan d'une armature de sommet d'un pneumatique 1 pour véhicule lourd de type génie civil selon l'invention. Les couches de l'armature de sommet ont été découpées de façon à faire apparaître l'ensemble des couches de sommet ainsi que les angles respectifs formés par leurs renforts avec la direction circonférentielle (YY'). L'armature de protection est constituée de deux couches de protection (51, 52) dont les renforts métalliques parallèles entre eux au sein d'une même couche forment, avec la direction circonférentielle (YY'), des angles respectifs A₁ et A₂ égaux entre eux et au moins égaux à 80° et strictement inférieurs à 90°. L'armature de travail est constituée de deux couches de travail (61, 62) dont les renforts métalliques parallèles entre eux au sein d'une même couche forment, avec la direction circonférentielle (YY'), des angles B₁ et B₂ respectivement au moins égal à 60° et au plus égal à 10 °. Enfin, l'armature additionnelle est constituée de deux couches additionnelles (71, 72) dont les renforts métalliques parallèles entre eux au sein d'une même couche forment, avec la direction circonférentielle (YY'), des angles respectifs C₁ et C₂ égaux entre eux et au plus égaux à 12°.

L'invention a été plus particulièrement étudiée pour des pneumatiques de dimension 53/80R63 et 24/85R35 en référence à un pneumatique de l'état de la technique.

L'armature de sommet du pneumatique selon l'invention comprend, radialement de l'extérieur vers l'intérieur :
- une armature de protection comprenant une première et une deuxième couche de protection, dont les renforts métalliques élastiques respectifs forment avec la direction circonférentielle des angles A₁ et A₂ respectivement égaux à +85° et -85°,
- une armature de travail comprenant une première et une deuxième couche de travail, dont les renforts métalliques non élastiques respectifs forment avec la direction circonférentielle des angles B₁ et B₂ respectivement égaux à +64° et -6°, correspondant à un angle équivalent égal à 25°,
- une armature additionnelle comprenant une première et une deuxième couche additionnelle, dont les renforts métalliques non élastiques respectifs forment avec la direction circonférentielle des angles C₁ et C₂ respectivement égaux à +8° et -8°.

L'armature de sommet du pneumatique de l'état de la technique comprend, radialement de l'extérieur vers l'intérieur :
- une armature de protection comprenant une première et une deuxième couche de protection, dont les renforts métalliques élastiques respectifs forment avec la direction circonférentielle des angles A₁ et A₂ respectivement égaux à +25° et -25°,
- une armature de travail comprenant une première et une deuxième couche de travail, dont les renforts métalliques non élastiques respectifs forment avec la direction circonférentielle des angles B₁ et B₂ respectivement égaux à +33° et -19°, correspondant à un angle équivalent égal à 25°,
- une armature additionnelle comprenant une première et une deuxième couche additionnelle, dont les renforts métalliques non élastiques respectifs forment avec la direction circonférentielle des angles C₁ et C₂ respectivement égaux à +8° et -8°.

Dans le cas d'un pneumatique de dimension 24/85R35, les tests de perforation du sommet à l'aide d'un indenteur cylindrique de diamètre égal à 1.2 pouces, soit 30.5 mm, ont montré un gain de 29% en résistance à la rupture totale du sommet pour un pneumatique selon l'invention par rapport à un pneumatique de l'état de la technique.

L'invention n'est pas limitée aux caractéristiques précédemment décrites et peut être étendue à d'autres modes de réalisation selon le cadre défini par les revendications ci-jointes, tels que par exemple et de façon non exhaustive :
- une armature de protection dont les couches de protection ont des renforts respectifs formant, avec la direction circonférentielle, des angles respectifs A₁ et A₂ au plus égaux à 10°, correspondant à un autre optimum de l'armature de sommet en vue de la résolution du problème technique envisagé.

## Revendications

1. Pneumatique (1) pour véhicule lourd de type génie civil comprenant :
- une bande de roulement (2), une armature de sommet (3) radialement intérieure à la bande de roulement (2) et une armature de carcasse (4) radialement intérieure à l'armature de sommet (3),
- l'armature de sommet (3) comprenant, radialement de l'extérieur vers l'intérieur,
- une armature de protection (5) comprenant une première couche de protection (51) et une deuxième couche de protection (52), les première et deuxième couches de protection (51, 52) comprenant des renforts métalliques élastiques **caractérisés par** un allongement structural Aₛ au moins égal à 1%, un allongement total à rupture Aₜ au moins égal à 4% et un module élastique en extension au plus égal à 150 GPa, parallèles entre eux dans chaque couche et croisés d'une couche à la suivante, en formant avec la direction circonférentielle (YY') des angles respectifs A₁ et A₂,
- une armature de travail (6) comprenant une première couche de travail (61), et une deuxième couche de travail (62), radialement extérieure et adjacente à la première couche de travail (61), les première et deuxième couches de travail (61, 62) comprenant des renforts métalliques non élastiques **caractérisés par** un allongement relatif, sous une force de traction égale 10% de la force à rupture Fₘ, au plus égal à 0.2% et un module élastique en extension compris entre 150 GPa et 200 GPa, parallèles entre eux dans chaque couche et croisés d'une couche à la suivante, en formant avec la direction circonférentielle (YY') des angles respectifs B₁ et B₂, où l'angle B₁, formé avec la direction circonférentielle (YY') par les renforts métalliques de la première couche de travail (61), est au moins égal à 50° et strictement inférieur à 90°, **caractérisé en ce que** ladite deuxième couche de protection (52) est radialement extérieure et adjacente à la première couche de protection (51) **et en ce que** l'angle B₂, formé avec la direction circonférentielle (YY') par les renforts métalliques de la deuxième couche de travail (62), est non nul et au plus égal à 12°.

2. Pneumatique (1) pour véhicule lourd de type génie civil selon la revendication 1, **caractérisé en ce que** l'angle B₁, formé avec la direction circonférentielle (YY') par les renforts métalliques de la première couche de travail (61), est au moins égal à 60°.

3. Pneumatique (1) pour véhicule lourd de type génie civil selon l'une des revendications 1 ou 2, **caractérisé en ce que** l'angle B₂, formé avec la direction circonférentielle (YY') par les renforts métalliques de la deuxième couche de travail (62), est au plus égal à 10°.

4. Pneumatique (1) pour véhicule lourd de type génie civil selon l'une quelconque des revendications 1 à 3, **caractérisé en ce que** les angles A₁ et A₂, formés avec la direction circonférentielle (YY') par les renforts métalliques respectivement de la première et de la deuxième couche de protection (51, 52), sont au moins égaux à 70° et strictement inférieurs à 90°.

5. Pneumatique (1) pour véhicule lourd de type génie civil selon l'une quelconque des revendications 1 à 4, **caractérisé en ce que** les angles A₁ et A₂, formés avec la direction circonférentielle (YY') par les renforts métalliques respectivement de la première et de la deuxième couche de protection (51, 52), sont au moins égaux à 80° et strictement inférieurs à 90°.

6. Pneumatique (1) pour véhicule lourd de type génie civil selon l'une quelconque des revendications 1 à 5, **caractérisé en ce que** les angles A₁ et A₂, formés avec la direction circonférentielle (YY') par les renforts métalliques respectivement de la première et de la deuxième couche de protection (51, 52), sont égaux entre eux en valeur absolue.

7. Pneumatique (1) pour véhicule lourd de type génie selon l'une quelconque des revendications 1 à 6, **caractérisé en ce que** la première couche de protection (51) est radialement extérieure et adjacente à la deuxième couche de travail (62).

8. Pneumatique (1) pour véhicule lourd de type génie civil selon l'une quelconque des revendications 1 à 7, **caractérisé en ce que** les renforts métalliques de la première couche de protection (51) sont croisés par rapport aux renforts métalliques de la deuxième couche de travail (62).

9. Pneumatique (1) pour véhicule lourd de type génie civil selon l'une quelconque des revendications 1 à 8, **caractérisé en ce que** l'armature de sommet (3) comprend, radialement à l'intérieur de l'armature de travail (6), une armature additionnelle (7) comprenant une première couche additionnelle (71), et une deuxième couche additionnelle (72), radialement extérieure et adjacente à la première couche additionnelle (71), les première et deuxième couches additionnelles (71, 72) comprenant des renforts métalliques non élastiques, parallèles entre eux dans chaque couche et croisés d'une couche à la suivante, en formant avec la direction circonférentielle (YY') des angles respectifs C₁ et C₂ au plus égaux à 15°.

10. Pneumatique (1) pour véhicule lourd de type génie civil selon la revendication 9, **caractérisé en ce que** les angles C₁ et C₂, formés avec la direction circonférentielle (YY') par les renforts métalliques respectivement de la première et de la deuxième couche additionnelle (71, 72), sont au plus égaux à 12°.

11. Pneumatique (1) pour véhicule lourd de type génie civil selon l'une quelconque des revendications 9 ou 10, **caractérisé en ce que** les angles C₁ et C₂, formés avec la direction circonférentielle (YY') par les renforts métalliques respectivement de la première et de la deuxième couche additionnelle (71, 72), sont égaux entre eux en valeur absolue.

12. Pneumatique (1) pour véhicule lourd de type génie civil selon l'une quelconque des revendications 1 à 11, la bande de roulement (2) et l'armature de protection (5) ayant des largeurs axiales respectives L₂ et L₅, **caractérisé en ce que** la largeur axiale L₅ de l'armature de protection (5) est au moins égale 0.85 fois et au plus égale à la largeur axiale L₂ de la bande de roulement (2).

13. Pneumatique (1) pour véhicule lourd de type génie civil selon l'une quelconque des revendications 1 à 12, la bande de roulement (2) et l'armature de travail (6) ayant des largeurs axiales respectives L₂ et L₆, **caractérisé en ce que** la largeur axiale L₆ de l'armature de travail (6) est au moins égale 0.7 fois et au plus égale à 0.9 fois la largeur axiale L₂ de la bande de roulement (2).

14. Pneumatique (1) pour véhicule lourd de type génie civil selon l'une quelconque des revendications 9 à 13, la bande de roulement (2) et l'armature additionnelle (7) ayant des largeurs axiales respectives L₂ et L₇, **caractérisé en ce que** la largeur axiale L₇ de l'armature additionnelle (7) est au moins égale 0.35 fois et au plus égale à 0.5 fois la largeur axiale L₂ de la bande de roulement (2).

## Patentansprüche

1. Reifen (1) für ein schweres Fahrzeug vom Typ eines Baufahrzeugs, umfassend:
- einen Laufstreifen (2), eine Scheitelbewehrung (3) radial innerhalb des Laufstreifens (2) und eine Karkassenbewehrung (4) radial innerhalb der Scheitelbewehrung (3),
- wobei die Scheitelbewehrung (3) umfasst, radial von außen nach innen:
- eine Schutzbewehrung (5), die eine erste Schutzschicht (51) und eine zweite Schutzschicht (52) umfasst, wobei die erste und zweite Schutzschicht (51, 52) elastische metallische Festigkeitsträger umfassen, die durch eine strukturelle Dehnung Aₛ von wenigstens 1 %, eine Gesamtbruchdehnung Aₜ von wenigstens 4 % und ein Dehnungselastizitätsmodul von höchstens 150 GPa charakterisiert sind, in jeder Schicht parallel zueinander sind und sich von einer Schicht zur folgenden überkreuzen, wobei sie mit der Umfangsrichtung (YY') jeweilige Winkel A₁ und A₂ bilden,
- eine Arbeitsbewehrung (6), die eine erste Arbeitsschicht (61) und eine zweite Arbeitsschicht (62), die radial außerhalb der ersten Arbeitsschicht (61) angeordnet und dieser benachbart ist, umfasst, wobei die erste und zweite Arbeitsschicht (61, 62) nicht elastische metallische Festigkeitsträger umfassen, die durch eine relative Dehnung, unter einer Zugkraft von 10 % der Bruchkraft Fₘ, von höchstens 0,2 % und ein Dehnungselastizitätsmodul zwischen 150 GPa und 200 GPa charakterisiert sind, in jeder Schicht parallel zueinander sind und sich von einer Schicht zur folgenden überkreuzen, wobei sie mit der Umfangsrichtung (YY') jeweilige Winkel B₁ und B₂ bilden,
wobei der Winkel B₁, der von den metallischen Festigkeitsträgern der ersten Arbeitsschicht (61) mit der Umfangsrichtung (YY') gebildet wird, wenigstens gleich 50° und streng kleiner als 90° ist,
**dadurch gekennzeichnet, dass** die zweite Schutzschicht (52) radial außerhalb der ersten Schutzschicht (51) angeordnet und dieser benachbart ist, und dadurch, dass der Winkel B₂, der von den metallischen Festigkeitsträgern der zweiten Arbeitsschicht (62) mit der Umfangsrichtung (YY') gebildet wird, von null verschieden und höchstens gleich 12° ist.

2. Reifen (1) für ein schweres Fahrzeug vom Typ eines Baufahrzeugs nach Anspruch 1, **dadurch gekennzeichnet, dass** der Winkel B₁, der von den metallischen Festigkeitsträgern der ersten Arbeitsschicht (61) mit der Umfangsrichtung (YY') gebildet wird, wenigstens gleich 60° ist.

3. Reifen (1) für ein schweres Fahrzeug vom Typ eines Baufahrzeugs nach einem der Ansprüche 1 oder 2, **dadurch gekennzeichnet, dass** der Winkel B₂, der von den metallischen Festigkeitsträgern der zweiten Arbeitsschicht (62) mit der Umfangsrichtung (YY') gebildet wird, höchstens gleich 10° ist.

4. Reifen (1) für ein schweres Fahrzeug vom Typ eines Baufahrzeugs nach einem der Ansprüche 1 bis 3, **dadurch gekennzeichnet, dass** die Winkel A₁ und A₂, die von den metallischen Festigkeitsträgern der ersten bzw. der zweiten Schutzschicht (51, 52) mit der Umfangsrichtung (YY') gebildet werden, wenigstens gleich 70° und streng kleiner als 90° sind.

5. Reifen (1) für ein schweres Fahrzeug vom Typ eines Baufahrzeugs nach einem der Ansprüche 1 bis 4, **dadurch gekennzeichnet, dass** die Winkel A₁ und A₂, die von den metallischen Festigkeitsträgern der ersten bzw. der zweiten Schutzschicht (51, 52) mit der Umfangsrichtung (YY') gebildet werden, wenigstens gleich 80° und streng kleiner als 90° sind.

6. Reifen (1) für ein schweres Fahrzeug vom Typ eines Baufahrzeugs nach einem der Ansprüche 1 bis 5, **dadurch gekennzeichnet, dass** die Winkel A₁ und A₂, die von den metallischen Festigkeitsträgern der ersten bzw. der zweiten Schutzschicht (51, 52) mit der Umfangsrichtung (YY') gebildet werden, ihrem absoluten Betrag nach gleich sind.

7. Reifen (1) für ein schweres Fahrzeug vom Typ eines Baufahrzeugs nach einem der Ansprüche 1 bis 6, **dadurch gekennzeichnet, dass** die erste Schutzschicht (51) radial außerhalb der zweiten Arbeitsschicht (62) angeordnet und dieser benachbart ist.

8. Reifen (1) für ein schweres Fahrzeug vom Typ eines Baufahrzeugs nach einem der Ansprüche 1 bis 7, **dadurch gekennzeichnet, dass** die metallischen Festigkeitsträger der ersten Schutzschicht (51) bezüglich der metallischen Festigkeitsträger der zweiten Arbeitsschicht (62) über Kreuz angeordnet sind.

9. Reifen (1) für ein schweres Fahrzeug vom Typ eines Baufahrzeugs nach einem der Ansprüche 1 bis 8, **dadurch gekennzeichnet, dass** die Scheitelbewehrung (3) radial innerhalb der Arbeitsbewehrung (6) eine zusätzliche Bewehrung (7) umfasst, die eine erste zusätzliche Schicht (71) und eine zweite zusätzliche Schicht (72), die radial außerhalb der ersten zusätzlichen Schicht (71) angeordnet und dieser benachbart ist, umfasst, wobei die erste und zweite zusätzliche Schicht (71, 72) nicht elastische metallische Festigkeitsträger umfassen, die in jeder Schicht parallel zueinander sind und sich von einer Schicht zur folgenden überkreuzen, wobei sie mit der Umfangsrichtung (YY') jeweilige Winkel C₁ und C₂ bilden, die höchstens gleich 15° sind.

10. Reifen (1) für ein schweres Fahrzeug vom Typ eines Baufahrzeugs nach Anspruch 9, **dadurch gekennzeichnet, dass** die Winkel C₁ und C₂, die von den metallischen Festigkeitsträgern der ersten bzw. der zweiten zusätzlichen Schicht (71, 72) mit der Umfangsrichtung (YY') gebildet werden, höchstens gleich 12° sind.

11. Reifen (1) für ein schweres Fahrzeug vom Typ eines Baufahrzeugs nach einem der Ansprüche 9 oder 10, **dadurch gekennzeichnet, dass** die Winkel C₁ und C₂, die von den metallischen Festigkeitsträgern der ersten bzw. der zweiten zusätzlichen Schicht (71, 72) mit der Umfangsrichtung (YY') gebildet werden, ihrem absoluten Betrag nach gleich sind.

12. Reifen (1) für ein schweres Fahrzeug vom Typ eines Baufahrzeugs nach einem der Ansprüche 1 bis 11, wobei der Laufstreifen (2) und die Schutzbewehrung (5) jeweilige axiale Breiten L₂ und L₅ aufweisen, **dadurch gekennzeichnet, dass** die axiale Breite L₅ der Schutzbewehrung (5) wenigstens gleich dem 0,85-fachen der und höchstens gleich der axialen Breite L₂ des Laufstreifens (2) ist.

13. Reifen (1) für ein schweres Fahrzeug vom Typ eines Baufahrzeugs nach einem der Ansprüche 1 bis 12, wobei der Laufstreifen (2) und die Arbeitsbewehrung (6) jeweilige axiale Breiten L₂ und L₆ aufweisen, **dadurch gekennzeichnet, dass** die axiale Breite L₆ der Arbeitsbewehrung (6) wenigstens gleich dem 0,7-fachen und höchstens gleich dem 0,9-fachen der axialen Breite L₂ des Laufstreifens (2) ist.

14. Reifen (1) für ein schweres Fahrzeug vom Typ eines Baufahrzeugs nach einem der Ansprüche 9 bis 13, wobei der Laufstreifen (2) und die zusätzliche Bewehrung (7) jeweilige axiale Breiten L₂ und L₇ aufweisen, **dadurch gekennzeichnet, dass** die axiale Breite L₇ der zusätzlichen Bewehrung (7) wenigstens gleich dem 0,35-fachen und höchstens gleich dem 0,5-fachen der axialen Breite L₂ des Laufstreifens (2) ist.

## Claims

1. Tyre (1) for a heavy vehicle of the civil engineering type, comprising:
- a tread (2), a crown reinforcement (3) radially on the inside of the tread (2), and a carcass reinforcement (4) radially on the inside of the crown reinforcement (3),
- the crown reinforcement (3) comprising, radially from the outside towards the inside,
- a protective reinforcement (5) comprising a first protective layer (51) and a second protective layer (52), the first and second protective layers (51, 52) comprising elastic metal reinforcers, **characterized by** a structural elongation Aₛ at least equal to 1%, a total elongation at break Aₜ at least equal to 4% and a tensile elastic modulus at most equal to 150 GPa, which are parallel to one another within each layer and crossed from one layer to the next, forming respective angles A₁ and A₂ with the circumferential direction (YY'),
- a working reinforcement (6) comprising a first working layer (61) and a second working layer (62), radially on the outside of and adjacent to the first working layer (61), the first and second working layers (61, 62) comprising inelastic metal reinforcers **characterized by** a relative elongation, under a tensile force equal to 10% of the breaking force Fₘ, at most equal to 0.02% and a tensile elastic modulus between 150 GPa and 200 GPa, parallel to one another within each layer and crossed from one layer to the next, forming respective angles B₁ and B₂ with the circumferential direction (YY'),
wherein the angle B₁, formed with the circumferential direction (YY') by the metal reinforcers of the first working layer (61), is at least equal to 50° and strictly less than 90° **characterized in that** said second protective layer (52) is radially on the outside of and adjacent to the first protective layer (51) and **in that** the angle B₂, formed with the circumferential direction (YY') by the metal reinforcers of the second working layer (62) is non-zero and at most equal to 12°.

2. Tyre (1) for a heavy vehicle of the civil engineering type according to Claim 1, **characterized in that** the angle B₁, formed with the circumferential direction (YY') by the metal reinforcers of the first working layer (61) is at least equal to 60°.

3. Tyre (1) for a heavy vehicle of the civil engineering type according to either of Claims 1 and 2, **characterized in that** the angle B₂, formed with the circumferential direction (YY') by the metal reinforcers of the second working layer (62), is at most equal to 10°.

4. Tyre (1) for a heavy vehicle of the civil engineering type according to any one of Claims 1 to 3, **characterized in that** the angles A₁ and A₂, formed with the circumferential direction (YY') by the metal reinforcers of the first and second protective layers (51, 52) respectively, are at least equal to 70° and strictly less than 90°.

5. Tyre (1) for a heavy vehicle of the civil engineering type according to any one of Claims 1 to 4, **characterized in that** the angles A₁ and A₂, formed with the circumferential direction (YY') by the metal reinforcers of the first and second protective layers (51, 52) respectively, are at least equal to 80° and strictly less than 90°.

6. Tyre (1) for a heavy vehicle of the civil engineering type according to any one of Claims 1 to 5, **characterized in that** the angles A₁ and A₂, formed with the circumferential direction (YY') by the metal reinforcers of the first and second protective layers (51, 52) respectively are equal to one another in terms of absolute value.

7. Tyre (1) for a heavy vehicle of the engineering type according to any one of Claims 1 to 6, **characterized in that** the first protective layer (51) is radially on the outside of and adjacent to the second working layer (62).

8. Tyre (1) for a heavy vehicle of the civil engineering type according to any one of Claims 1 to 7, **characterized in that** the metal reinforcers of the first protective layer (51) are crossed with respect to the metal reinforcers of the second working layer (62).

9. Tyre (1) for a heavy vehicle of the civil engineering type according to any one of Claims 1 to 8, **characterized in that** the crown reinforcement (3) comprises, radially on the inside of the working reinforcement (6), an additional reinforcement (7) comprising a first additional layer (71) and a second additional layer (72), radially on the outside of and adjacent to the first additional layer (71), the first and second additional layers (71, 72) comprising inelastic metal reinforcers which are parallel to one another within each layer and crossed from one layer to the next, forming respective angles C₁ and C₂ at most equal to 15° with the circumferential direction (YY').

10. Tyre (1) for a heavy vehicle of the civil engineering type according to Claim 9, **characterized in that** the angles C₁ and C₂, formed with the circumferential direction (YY') by the metal reinforcers of the first and second additional layer (71, 72) respectively are at most equal to 12°.

11. Tyre (1) for a heavy vehicle of the civil engineering type according to either one of Claims 9 and 10, **characterized in that** the angles C₁ and C₂, formed with the circumferential direction (YY') by the metal reinforcers of the first and second additional layer (71, 72) respectively are equal to one another in terms of absolute value.

12. Tyre (1) for a heavy vehicle of the civil engineering type according to any one of Claims 1 to 11, the tread (2) and the protective reinforcement (5) having respective axial widths L₂ and L₅, **characterized in that** the axial width L₅ of the protective reinforcement (5) is at least equal to 0.85 times and at most equal to the axial width L₂ of the tread (2).

13. Tyre (1) for a heavy vehicle of the civil engineering type according to any one of Claims 1 to 12, the tread (2) and the working reinforcement (6) having respective axial widths L₂ and L₆, **characterized in that** the axial width L₆ of the working reinforcement (6) is at least equal to 0.7 times and at most equal to 0.9 times the axial width L₂ of the tread (2).

14. Tyre (1) for a heavy vehicle of the civil engineering type according to any one of Claims 9 to 13, the tread (2) and the additional reinforcement (7) having respective axial widths L₂ and L₇, **characterized in that** the axial width L₇ of the additional reinforcement (7) is at least equal to 0.35 times and at most equal to 0.5 times the axial width L₂ of the tread (2).
